# EUROPEAN PATENT APPLICATION

(11) **EP 4 071 760 A1**
(43) Date of publication of application: **12.10.2022**
(21) Application number: 22166669.6
(22) Date of filing: 05.04.2022
(51) Int. Cl.: G11B 27/031, G06T 13/40, G06T 11/60

(54) **METHOD AND APPARATUS FOR GENERATING VIDEO**

(30) Priority: 08.04.2021 KR 20210045651
(71) Applicant: DotDotDot Co., Ltd., Seoul 06267 (KR)
(72) Inventor: CHANG, Joon Soo, 04757 Seoul (KR); YOON, Yong Ki, 16990 Gyeonggi-do (KR); BAE, Yong Taek, 07993 Seoul (KR); CHOI, Jae Hoon, 13566 Gyeonggi-do (KR)
(74) Representative: EIP

(57) **Abstract**

A method and apparatus for generating a video are disclosed. The method for generating a video according to an example embodiment includes acquiring voice data, facial image data including a face, and input data including a purpose of a video, determining, based on a movement of a facial feature extracted from the facial image data and the voice data, a movement of a character, determining, based on the voice data and the purpose, a shot corresponding to the character, and generating, based on the determined shot, a video corresponding to the voice data.

## Description

### CROSS-REFERENCE TO RELATED APPLICATION

This application claims the benefit of Korean Patent Application No. 10-2021-0045651 filed on April 08, 2021, in the Korean Intellectual Property Office, the entire disclosure of which is incorporated herein by reference for all purposes.

### BACKGROUND

### 1. Field of the Invention

One or more example embodiments relate to a method and apparatus for generating a video.

### 2. Description of the Related Art

Recently, with the development of mobile smart devices, the use of social networking service (SNS), which is an online platform service for interacting with other users through a network, has been increasing. In order to achieve the purpose of creating and strengthening a social relationship through communication, information sharing, and social network broadening among users, the SNS provides social networking functions through exchange of various types of information such as texts, photos, videos, voices, and the like. There is a demand for a technology for various types of social networking services that allows a user to freely express his/her individuality and thoughts and communicate conveniently with other users.

### SUMMARY

Example embodiments provide a technology for generating a moving character according to a user input, and generating a video acquired by shooting the moving character using various shooting techniques.

Example embodiments provide a video generating technology for automatically generating elements required for generating a video, and providing an editing function of the automatically generated elements.

However, the technical issue is not limited to the above-described technical issues, and other technical issues may exist.

According to an aspect, there is provided a video generating method including acquiring voice data, facial image data including a face, and input data including a purpose of a video, determining, based on a movement of a facial feature extracted from the facial image data and the voice data, a movement of a character, determining, based on the voice data and the purpose, a shot corresponding to the character, and generating, based on the determined shot, a video corresponding to the voice data.

The determining of the shot may include determining, based on an utterance section in the voice data, a length of the shot, and determining, based on the purpose, a type of the shot.

The type of the shot may be distinguished by a shot size based on a size of the character projected onto the shot and a shot angle based on an angle of the character projected onto the shot.

The determining of the shot may include determining, based on the purpose, a sequence of a plurality of shots, the plurality of shots including a plurality of different types of shots, dividing, based on a change in a size of the voice data, the voice data into a plurality of utterance sections, and determining, based on the plurality of utterance sections, lengths of the plurality of shots.

The determining of the lengths of the plurality of shots may include determining, based on the purpose and the plurality of utterance sections, at least one transition point at which a shot is transited, and determining, based on the transition point, the lengths of the plurality of shots.

The determining of the shot may further include at least one of changing, based on an input of a user, an order of shots in the sequence, adding, based on the input of the user, at least one shot to the sequence, deleting, based on the input of the user, at least one shot in the sequence, changing, based on the input of the user, a type of a shot in the sequence, and changing, based on the input of the user, a length of the shot in the sequence.

The determining of the movement of the character may include determining, based on pronunciation information corresponding to the voice data, a movement of a mouth shape of the character, and determining, based on a movement of the facial feature extracted to correspond to a plurality of frames of the facial image data, a movement of a facial element of the character.

The determining of the movement of the character may include determining, based on the purpose, a facial expression of the character, determining, based on a movement of the facial feature and the voice data, a movement of a facial element of the character, and combining the determined facial expression of the character and the movement of the facial element of the character.

The determining of the movement of the character may further include changing, based on an input of a user, the facial expression of the character.

The acquiring of the input data may further include extracting, from the facial image data, the movement of the facial feature including at least one of a movement of a pupil, a movement of an eyelid, a movement of an eyebrow, and a movement of a head.

The character may include a first character whose movement is determined based on a movement of a first facial feature acquired from first facial image data in the facial image data and first voice data in the voice data, and a second character whose movement is determined based on a movement of a second facial feature acquired from second facial image data in the facial image data and second voice data in the voice data.

The determining of the shot may include determining, based on the first voice data in the voice data, the second voice data in the voice data, and the purpose, a shot corresponding to the first character and the second character.

The determining of the shot may include determining, based on the purpose, arrangement of the first character and the second character included in the shot.

The determining of the movement of the character may further include determining, based on at least one of the purpose, the first voice data, and the second voice data, an interaction between the first character and the second character, and determining, based on the determined interaction, the movement of the first character and the movement of the second character.

The voice data may include first voice data acquired from a first user terminal and second voice data acquired from a second user terminal.

The facial image data may include first facial image data acquired from the first user terminal and second facial image data acquired from the second user terminal.

According to another aspect, there is provided a video generating apparatus including at least one processor configured to acquire voice data, facial image data including a face, and input data including a purpose of a video, determine, based on a movement of a facial feature extracted from the facial image data and the voice data, a movement of a character, determine, based on the voice data and the purpose, a shot corresponding to the character, and generate, based on the determined shot, a video corresponding to the voice data.

In determining the shot, the processor may be configured to determine, based on the purpose, a sequence of a plurality of shots, the plurality of shots including a plurality of different types of shots, divide, based on a change in a size of the voice data, the voice data into a plurality of utterance sections, and determine, based on the plurality of utterance sections, lengths of the plurality of shots.

In determining the shot, the processor may be configured to further perform at least one of an operation of changing, based on an input of a user, an order of shots in the sequence, an operation of adding, based on the input of the user, at least one shot to the sequence, an operation of deleting, based on the input of the user, at least one shot in the sequence, an operation of changing, based on the input of the user, a type of a shot in the sequence, and an operation of changing, based on the input of the user, a length of the shot in the sequence.

In determining the movement of the character, the processor may be configured to determine, based on the purpose, a facial expression of the character, determine, based on a movement of the facial feature and the voice data, a movement of a facial element of the character, and combine the determined facial expression of the character and the movement of the facial element of the character.

In determining the facial expression of the character, the processor may be configured to change, based on an input of a user, the facial expression of the character.

Additional aspects of example embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 is an operation flowchart of a video generating method according to an example embodiment;
FIG. 2 is a diagram illustrating examples of various facial expressions corresponding to a character according to an example embodiment;
FIG. 3 is a diagram illustrating examples of different types of shots determined to correspond to a purpose of a video according to an example embodiment;
FIG. 4 is a graph illustrating an example of a change in a volume of a sound with lapse of time according to an example embodiment;
FIGS. 5 to 9 are diagrams illustrating an example of an interface for editing a determined shot according to an example embodiment; and
FIG. 10 is a block diagram illustrating a configuration of a video generating system according to an example embodiment.

### DETAILED DESCRIPTION

The following structural or functional descriptions of example embodiments described herein are merely intended for the purpose of describing the example embodiments described herein and may be implemented in various forms. Here, the example embodiments are not construed as limited to the disclosure and should be understood to include all changes, equivalents, and replacements within the idea and the technical scope of the disclosure.

Although terms of "first," "second," and the like are used to explain various components, the components are not limited to such terms. These terms are used only to distinguish one component from another component. For example, a first component may be referred to as a second component, or similarly, the second component may be referred to as the first component within the scope of the present disclosure.

When it is mentioned that one component is "connected" or "accessed" to another component, it may be understood that the one component is directly connected or accessed to another component or that still other component is interposed between the two components.

The terminology used herein is for the purpose of describing particular example embodiments only and is not to be limiting of the example embodiments. As used herein, the singular forms "a," "an," and "the" are intended to include the plural forms as well, unless the context clearly indicates otherwise. As used herein, the term "and/or" includes any one and any combination of any two or more of the associated listed items. It will be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching contextual meanings in the related art and are not to be construed as an ideal or excessively formal meaning unless otherwise defined herein.

Hereinafter, example embodiments will be described in detail with reference to the accompanying drawings. When describing the example embodiments with reference to the accompanying drawings, like reference numerals refer to like components and a repeated description related thereto will be omitted.

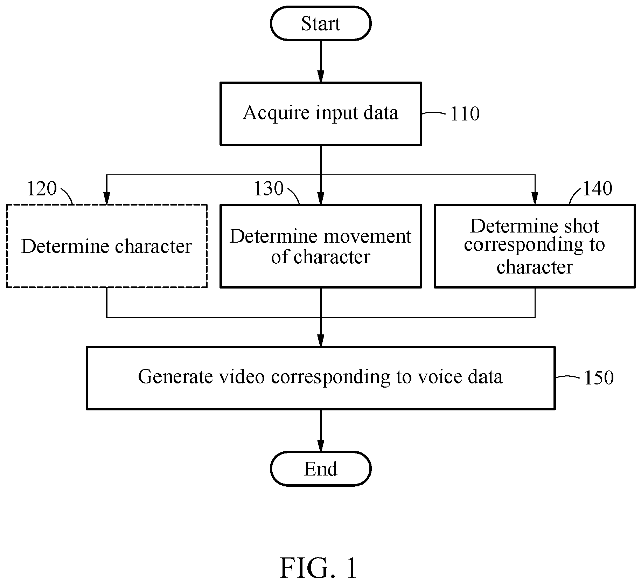

FIG. 1 is an operation flowchart of a video generating method according to an example embodiment.

Referring to FIG. 1, the video generating method according to an example embodiment may include acquiring input data (operation 110), determining a character (operation 120), determining a movement of the character (operation 130), determining a shot corresponding to the character (operation 140), and generating a video corresponding to voice data (operation 150).

The video generating method according to an example embodiment may be performed by at least one processor of a video generating system. The video generating system, which is a system that processes voice data, facial image data including a face, and input data including a purpose of a video, and outputs a video corresponding to the input data, may be driven by at least one processor. Hereinafter, the video generating system may be briefly referred to as a system.

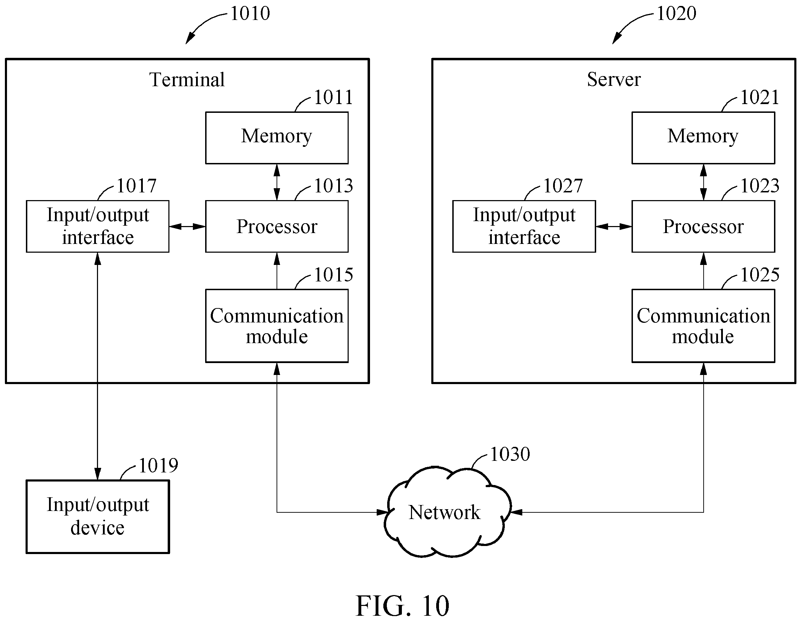

According to an example embodiment, the video generating system may be implemented as an apparatus, and the apparatus in which the video generating system is implemented may include a user terminal (for example, a mobile phone and a computer) and a server. The user terminal may include a user interface for receiving input data from a user and providing, to the user, a video according to processing of the input data. The user terminal may be operatively connected to a server through a network. Hereinafter, the user terminal may be briefly referred to as a terminal. Operations of the video generating method according to an example embodiment may be performed by a processor included in the terminal or the server in the system. A detailed configuration of the video generating system according to an example embodiment is described in detail with reference to FIG. 10 below.

Operation 110 according to an example embodiment may include acquiring voice data, facial image data including a face, and input data including a purpose of a video. The voice data may correspond to a sound signal generated by an utterance of the user. The facial image data, which is image data including at least one face, may include a still image and a video. Hereinafter, a case in which the facial image data is the video is described as an example, but is not limited thereto.

The facial image data and the voice data according to an example embodiment may correspond to data synchronized on a time axis. For example, the acquired facial image data may correspond to a video acquired by shooting a face of the uttering user, and the acquired voice data may include a voice signal of the uttering user synchronized with the facial image data on the time axis.

The purpose of the video, which relates to a subject or style of the video being generated, may include, for example, a sincere assertion, strong will, objective analysis, romantic conversation, argument, pleasant conversation, fun thing, scary conversation, gratitude, sad experience, embarrassing situation, and unfair thing.

According to an example embodiment, the input data may be acquired from the user through a user interface for input. For example, the user may input voice data and facial image data by shooting a video through a user interface provided by an application installed in the user terminal. For example, the user may be provided with predetermined options that may be selected as the purpose of the video through the user interface provided by the application installed in the user terminal, and at least one selected by the user among the predetermined options related to the purpose of the video may be acquired as the purpose of the acquired video.

Operations 120 to 140 according to an example embodiment may include setting, based on the acquired input data, a parameter for generating a video. The parameter for generating a video, which is a factor for determining at least one element included in the video, may include, for example, a parameter related to an appearance of a character, a parameter related to a movement of the character, and a parameter related to a shot, but is not limited thereto.

According to an example embodiment, the input data acquired in operation 110 may include a selection input of the user for determining the appearance of the character. According to an example embodiment, operation 120 may include determining the character based on the selection input of the user for determining the appearance of the character acquired in operation 110. Determining the character may refer to determining a value of the parameter related to the appearance of the character. The parameter value related to the appearance of the character may include a parameter value for each of elements related to an appearance that determine the appearance of the character (for example, a hair style, a face shape, a body type, a skin color, eyebrows, eyes, a nose, a mouth, clothes). The appearance of the character may be visually determined based on the parameter value related to the appearance of the character.

According to an example embodiment, parameters related to various appearances of the character may be determined by the selection input of the user for determining the appearance of the character. For example, a parameter value related to a type of character (for example, an alien, an animal, and a human), a parameter value related to a style of the character (for example, a Japanese manga style and an American comic style), and a parameter value related to clothes of the character may be determined by the selection input of the user.

According to an example embodiment, a plurality of candidates predetermined to correspond to the elements related to the appearance of the character may be provided to the user, and the user may determine parameter values of the elements related to the appearance of the character in a manner of selecting one of the plurality of candidates provided to correspond to respective elements. For example, the user may determine the parameter values of the elements related to the appearance of the character by selecting one of a plurality of hairstyles, a plurality of face shapes, a plurality of eye shapes, a plurality of skin colors, and a plurality of clothes provided through the interface. According to an example embodiment, the plurality of candidates may include elements related to the appearance of the character generated by another user.

According to an example embodiment, operation 120 may include determining the character based on a facial feature extracted from the facial image data acquired in operation 110. In other words, the character may be determined based on the facial feature extracted from the facial image data. According to an example embodiment, the facial feature, which is a feature of facial elements recognized in a facial image, may include, for example, a position of a pupil, a shape of an eyebrow, and a direction of a head acquired based on positions of feature point(s) of a face contour, eyes, nose, mouth, and eyebrows. The facial feature may be extracted from the facial image data based on various face recognition algorithms or facial feature extraction algorithms.

According to an example embodiment, the value of the parameter related to the appearance of the character may be determined based on the facial feature extracted from facial image data. For example, a parameter value related to an eyebrow element of the character may be determined based on the extracted eyebrow shape, a parameter value related to a head element of the character may be determined based on the extracted head direction, and a parameter value related to an eye element of the character may be determined based on the extracted pupil position.

According to an example embodiment, the character may be determined, further based on other features than the facial feature extracted from the facial image data. For example, the parameter value related to the appearance of the character may be determined based on characteristics such as a gender, a skin color, a face shape, and a hairstyle extracted from the facial image data.

According to an example embodiment, the parameter value determined based on the facial feature or other features extracted from the facial image data may also be changed by the selection input of the user. For example, the eyebrow shape, the gender, the skin color, the face shape, and the hairstyle of the character that are already determined may be changed by the selection input of the user.

According to an example embodiment, operation 130 may include determining the movement of the character based on a movement of the facial feature extracted from the facial image data and the voice data. According to an example embodiment, the movement of the facial feature may include a change in a position and a shape of at least one facial feature extracted to correspond to a plurality of frames of the facial image data with lapse of time. For example, the movement of the facial feature may include a movement of the pupil including a change in a position of the pupil, a movement of an eyelid including a blinking movement of the eyelid, a movement of the eyebrow including a change in a height and an angle of the eyebrow, and a movement of the head including a change in a direction of the head.

According to an example embodiment, the movement of the character may be determined based on the movement of the facial feature extracted from the facial image data acquired in operation 110 and the voice data acquired in operation 110. The movement of the character, which refers to a change in a position and/or a shape of the entire character or a part of the character with lapse of time, may include a movement corresponding to the movement of the facial feature extracted from the facial image data. For example, the movement of the character may include a movement of the character itself and a movement of a position and/or a shape of the eyebrow, pupil, eyelid, arm, leg, or mouth of the character corresponding to the movement of the facial feature.

Operation 130 according to an example embodiment may include determining, based on pronunciation information corresponding to the voice data acquired in operation 110, a movement of a mouth shape of the character, and determining, based on the movement of the facial feature extracted to correspond to the plurality of frames of the facial image data acquired in operation 110, a movement of a facial element of the character.

According to an example embodiment, a mouth shape corresponding to the pronunciation information may be predetermined. For example, a first mouth shape corresponding to pronunciation [a] may be predetermined, and may be determined with reference to an actual mouth shape of a person for making the pronunciation.

According to an example embodiment, pronunciation information corresponding to each frame of the voice data may be acquired by performing voice recognition on the voice data acquired in operation 110. A mouth shape corresponding to the pronunciation information of each frame may be determined based on the mouth shape predetermined to correspond to the pronunciation information. A movement of the mouth shape may be generated by connecting mouth shapes determined to correspond to respective frames in a chronological order of the frames.

According to an example embodiment, the movement of the facial element of the character may be determined based on the movement of the facial feature extracted to correspond to the plurality of frames of the facial image data. For example, the movement of the pupil of the character may be determined based on the change in the position of the pupil extracted to correspond to the plurality of frames, and the movement of the head of the character may be determined based on the change in the direction of the head extracted to correspond to the plurality of frames. Here, the face element may include facial elements such as eyebrows and eyes included in a face of the character except for the mouth shape.

Operation 130 according to an example embodiment may include determining, based on the acquired purpose, a facial expression of the character, determining, based on the movement of the acquired facial feature and the voice data, the movement of the facial element of the character, and combining the determined facial expression of the character and the determined movement of the facial element of the character. Here, the facial element may include the mouth shape.

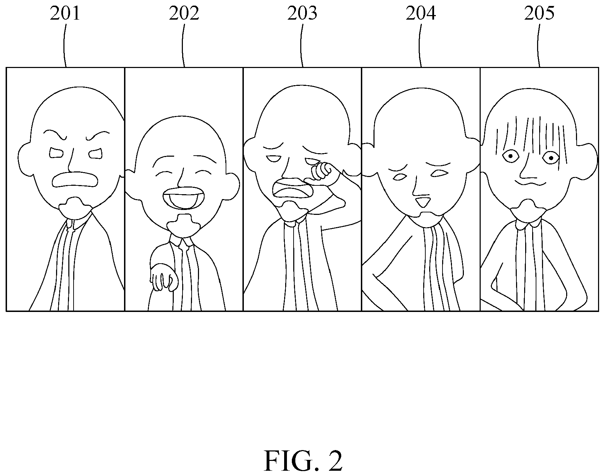

According to an example embodiment, face shapes of a plurality of characters corresponding to a plurality of facial expressions may be predetermined to correspond to the character determined in operation 120. For example, referring to FIG. 2, face shapes 201 to 205 of the character corresponding to the plurality of facial expressions corresponding to the determined character may be determined.

According to an example embodiment, the movement of the mouth shape determined based on the pronunciation information corresponding to the voice data may be combined with a face shape of the character corresponding to a specific facial expression to generate a movement of the character uttering with the specific facial expression.

According to an example embodiment, some parameters of the mouth shape may be corrected according to the combined facial expression. For example, referring to FIG. 2, when combined with a smiling facial expression 202, a parameter of the mouth shape whose movement is determined according to the pronunciation information may be corrected to have a form in which a mouth is further opened or a form in which mouth corners further go up. When combined with an angry facial expression 201, the parameter of the mouth shape whose movement is determined according to the pronunciation information may be corrected to have a form in which a mouth is wider to the side.

According to an example embodiment, the movement of the pupil determined based on the movement of the extracted facial feature may be combined with the face shape of the character corresponding to the specific facial expression to generate a movement of the character corresponding to the acquired facial image data.

According to an example embodiment, the facial expression of the character determined based on the purpose of the video may include a plurality of facial expressions. In other words, the facial expression of the character may include a facial expression sequence including the plurality of facial expressions. For example, the facial expression of the character may be determined as a first facial expression with respect to a first frame and a second frame of the facial image data or the voice data, and as a second facial expression with respect to a third frame and a fourth frame of the facial image data or the voice data.

Referring back to FIG. 1, operation 140 according to an example embodiment may correspond to determining, based on the voice data and the purpose of the video acquired in operation 110, a shot corresponding to the character. The shot, which is a basic unit of shooting, may refer to a scene that is shot at once, and types of the shot may be classified into a type related to a shot size based on a size of a projected subject (for example, a close-up shot, a bust shot, a full shot, and a long shot), and a type related to a shot angle based on an angle of the subject projected onto the shot (for example, a bird-eye view shot, a high-angle shot, an eye-level shot, and a low-angle shot). In addition, the shot types may include various types such as a type based on the number of subjects included in a shot (for example, a one-shot, a two-shot, a three-shot, and a group shot), a type based on camera manipulation (for example, a panning shot, a tilt shot, and a zoom shot), and a type based on a movement of a camera (for example, a dolly shot, a tracking shot, an arc shot, and an aerial shot). According to an example embodiment, the subject may correspond to the character whose movement is determined in operations 120 and 130, and the determined shot may correspond to a scene acquired by shooting a moving character with a virtual camera in a virtual space.

Operation 140 according to an example embodiment may include determining, based on an utterance section in the acquired voice data, a length of the shot, and determining, based on the acquired purpose, a type of the shot.

According to an example embodiment, the determining of the shot (operation 140) may include determining, based on the purpose of the video, a sequence of a plurality of shots, dividing, based on a change in a size of the voice data, the voice data into a plurality of utterance sections, and determining, based on the plurality of utterance sections, lengths of the plurality of shots.

Operation 140 according to an example embodiment may include determining a shot sequence including at least one shot corresponding to the purpose. The shot sequence may include one shot or a plurality of shots whose order is determined. The plurality of shots included in the shot sequence may include a plurality of different types of shots. For example, the plurality of shots included in the shot sequence may include a plurality of shots that are different from each other in terms of at least one of a shot size and a shot angle.

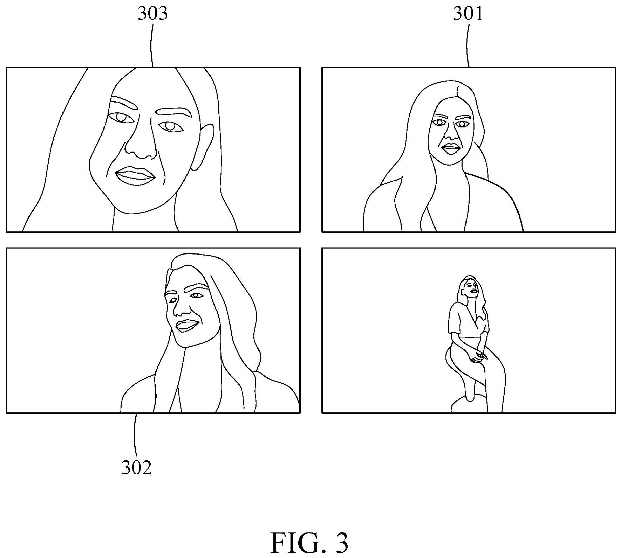

According to an example embodiment, the shot sequence corresponding to the purpose may be determined based on a shot used when shooting a video for the purpose. For example, referring to FIG. 3, when the purpose of the video is "interview," a shot sequence including four shots used when shooting a video for the purpose of "interview" may be determined to correspond to the purpose of "interview." A plurality of shots included in the shot sequence may include different types of shots. The plurality of shots included in the shot sequence may include first to fourth types of shots that are different from each other in terms of at least one of a shot size and a shot angle. For example, a shot 301 and a shot 302 may be the same in terms of a shot size in that the shot 301 and the shot 302 include a subject that is shot up to his/her chest, whereas thus the shot 301 and the shot 302 may be different from each other in terms of a shot angle in that the shot 301 includes the subject that is shot from the front, and the shot 302 includes the subject that is shot in an oblique direction. For another example, the shot 301 and a shot 303 may be the same in terms of a shot angle in that the shot 301 and the shot 303 include a subject that is shot from the front, whereas the shot 301 and the shot 303 may be different from each other in terms of a shot size in that the shot 303 includes the subject that is shot up to his/her neck, and the shot 301 includes the subject that is shot up to his/her chest.

Lengths of the plurality of shots included in the shot sequence according to an example embodiment may be determined based on an utterance section in the voice data. The utterance section may be a section in which an utterance continues in the voice data. For example, one utterance section may correspond to a section from a point recognized as a start point of an utterance in the voice data to a point recognized as an end point of the utterance in the voice data, or a section from a point recognized as a start point of an utterance in the voice data to a point recognized as a start point of a next utterance of the utterance.

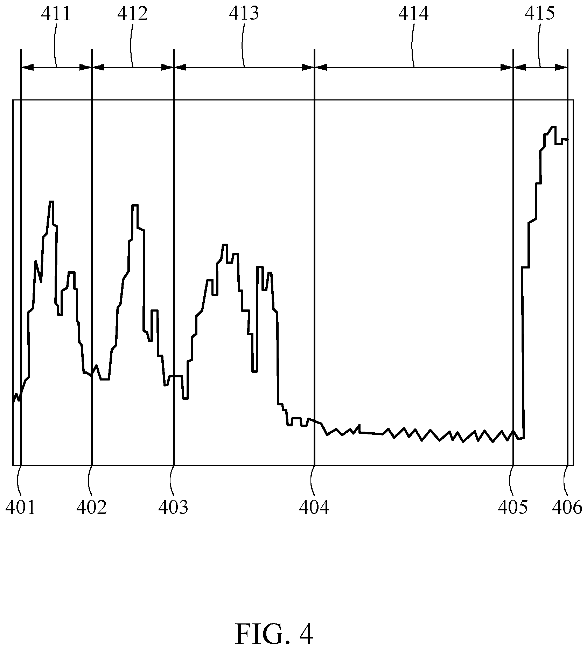

According to an example embodiment, a start point or an end point of an utterance may be recognized from the voice data, based on a change in a sound volume with lapse of time included in the acquired voice data. For example, FIG. 4 is a graph illustrating a change in a sound volume with lapse of time corresponding to the acquired voice data. Referring to FIG. 4, the start point or the end point of the utterance may be recognized based on the change in the sound volume, and the voice data may be divided into utterance sections 411 to 415 having, as a boundary, the recognized start or end point of the utterance. The start point or end point of the utterance may be determined based on a point at which a strength of a sound signal abruptly changes, a point at which the strength of the sound signal decreases below a threshold value, and a point at which the strength of the sound signal increases above the threshold value, but is not limited thereto. In addition, a point at which a sentence starts or a point at which the sentence ends may be determined as the start point or the end point of the utterance, using a voice recognition result of the voice data.

According to an example embodiment, a start point of a specific utterance may be the same as an end point of a previous utterance, or may be recognized later than the end point of the previous utterance. For example, when a time interval between a point recognized as the start point of the specific utterance and a point recognized as the end point of the previous utterance is less than a predetermined threshold value, the start point of the specific utterance and the end point of the previous utterance may be determined as the same point. For example, referring to FIG. 4, an end point 403 of an utterance corresponding to the section 412 and a start point 403 of an utterance corresponding to the section 413 may be determined as the same point. An end point 404 of the utterance corresponding to the section 413 and a start point 405 of an utterance corresponding to the section 415 may be determined as different points. In this case, the section 414 may not include a voice signal of an utterance. However, the section 414 may also be included in an utterance section.

According to an example embodiment, a length of a shot may be determined to include at least one utterance section. For example, referring to FIG. 4, when a shot sequence including two shots is determined, a first shot that is a temporally advanced may be determined to have a length from a start point 401 of the voice data to one of a point 402, a point 403, a point 404, and a point 405 of the voice data. In other words, the first shot may be determined to have a length including any number of sections among one section to four sections from the start point 401 of the voice data. In the shot sequence, a second shot that is a next shot of the first shot may be determined to have a length including any number of sections among one section to four sections from an end point of the first shot to an end point 406 of the voice data.

According to an example embodiment, the determining of the lengths of the plurality of shots may include determining, based on the purpose of the video and the plurality of utterance sections, at least one transition point at which a shot is transited, and determining, based on the determined transition point, the lengths of the plurality of shots. A boundary of an utterance section included in the voice data may be determined as a transition point at which a shot transition occurs. The determined number of transition points may correspond to the number of shots included in the shot sequence. For example, a first shot in chronological order included in the shot sequence may be determined to have a length from a start point of the voice data to a first transition point in chronological order, and a second shot may be determined to have a length from the first transition point to a second transition point. A last shot may be determined to have a length from a point at which a previous shot ends to an end point of the voice data.

According to an example embodiment, the number of shots included in the shot sequence and the number of transition points determined from the voice data may be determined based on the purpose of the acquired video. For example, when the purpose of the video is to express a sense of excitement, the number of shots included in the shot sequence and the number of transition points in the voice data may be determined so that a large number of shot transitions occur.

According to an example embodiment, a length between the shots may be arbitrarily determined or may be determined based on the purpose of the video. For example, a transition point in the voice data may be determined so that the lengths of the plurality of shots included in a shot sequence are determined to be similar according to the purpose of the video. As described above, the transition point in the voice data may be determined as a boundary between utterances sections included in the voice data. For another example, the transition point in the voice data may be determined so that the number of voice sections included in each of the plurality of shots included in the shot sequence is the same according to the purpose of the video. For another example, a ratio of the lengths between the plurality of shots included in the shot sequence may be determined according to the purpose of the video, and the transition point in the voice data may be determined to follow the determined ratio.

According to an example embodiment, a posture of a character included in the shot and a movement of the posture may be determined based on the purpose of the acquired video. For example, the posture of the character may be determined as a sitting posture to correspond to a video purpose of an interview, and the movement of the posture may be determined to include a gesture of a hand motion according to an utterance in the sitting posture.

According to an example embodiment, a background and a prop included in the shot may be determined based on the purpose of the acquired video. For example, a background corresponding to an interview space may be determined to correspond to the video purpose of the interview, and a chair or a camera may be included in the shot as a prop.

According to an example embodiment, shots corresponding to the purpose of the video may be determined based on a rule-based model. For example, a set of shots corresponding to a specific purpose or a sequence of shots corresponding to the specific purpose may be determined based on a predefined rule. When the set of shots corresponding to the specific purpose is determined based on the predefined rule, an order between the shots may be determined based on the predefined rule. The order between the shots may be arbitrarily determined, or may be determined based on a predetermined priority order between the shots.

According to an example embodiment, the shots corresponding to the purpose of the video may be determined based on a statistics-based model. The statistics-based model may correspond to a model for outputting, based on a statistical probability such as a frequency of shots appearing in a video having a specific purpose, and a probability that a second shot will appear after a first shot in the video having the specific purpose, a set of shots or a sequence of shots corresponding to the video having the specific purpose.

According to an example embodiment, the shots corresponding to the purpose of the video may be determined based on a learning-based model. When a purpose of a video is inputted, the learning-based model may correspond to a model for outputting a set of shots or a sequence of shots corresponding to the inputted purpose by learning the purpose of the video from video data and a type of shot used in the video data. The learning-based model may include a deep learning model, and a structure of the deep learning model may be configured in various ways. According to a structure of the learning-based model, learning may be performed based on various learning methods.

According to an example embodiment, when the set of shots corresponding to the specific purpose is determined based on a first model, the order between the shots may be arbitrarily determined or determined based on a second model. In other words, a method for determining the set of shots corresponding to the specific purpose and a method for determining an order of the shots may use different models. For example, the set of shots corresponding to the specific purpose may be determined using the first model based on statistics, and the order of the shots may be determined using the second model based on a rule.

According to an example embodiment, lengths of shots included in the shot sequence may be determined based on at least one of the rule-based model, the statistics-based model, and the learning-based model. The lengths of the shots included in the shot sequence may be determined based on the voice data by a model for determining a shot sequence, or may be determined based on the shot sequence and the voice data by a model configured independently of the model for determining a shot sequence.

According to an example embodiment, elements included in a shot corresponding to the purpose of the video may be determined based on at least one of the rule-based model, the statistics-based model, and the learning-based model. The elements included in the shot may include a posture of a character included in the shot or a movement of the posture, and a background or a prop included in the shot.

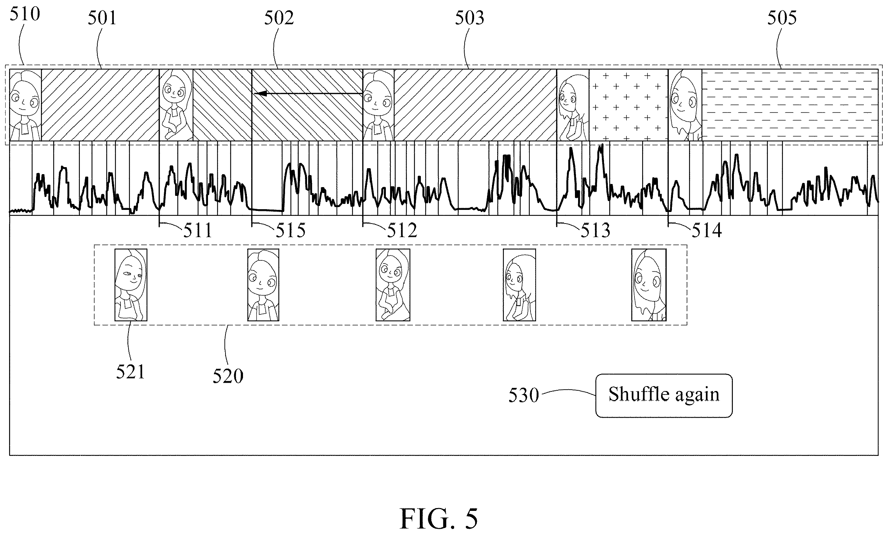

According to an example embodiment, the determined shot and the elements included in the shot may be changed based on a user input. For example, based on the user input, an order of the determined shot sequence may be changed, a type of shot included in the shot sequence may be changed, lengths of the determined shots may be changed, and shots included in the shot sequence may be added or deleted. In addition, based on the user input, an appearance, a facial expression, and a posture of the character included in the shot may be changed, and the background and the prop included in the shot may be changed. An operation of changing, based on the user input, the determined shot and the elements included in the shot according to an example embodiment is described in detail with reference to FIGS. 5 to 9 below.

Referring back to FIG. 1, operation 150 according to an example embodiment may include generating, based on the determined shot, a video corresponding to voice data. According to an example embodiment, a video including a character whose movement is determined may be generated based on the determined shot. The generated video may correspond to a video acquired by sequentially shooting a character moving according to the determined movement with a length of shot and a type of shot according to the determined shot sequence.

According to an example embodiment, the generated video may be outputted together with inputted voice data, and may correspond to a video synchronized with the voice data on a time axis. For example, the generated video may include a character whose movement is determined to make an utterance corresponding to the voice data.

According to an example embodiment, a preprocessing operation of removing noise other than a voice may be performed on the inputted voice data, and a modulation operation of changing a voice may also be performed.

A video generating method according to an example embodiment may include an operation of generating a video including a plurality of characters. Hereinafter, a case in which the plural number is two is described as an example for ease of description, but an operation of generating a video including two characters may be applied to an operation of generating a video including two or more characters.

According to an example embodiment, the plurality of characters may include a first character whose movement is determined based on a movement of a first facial feature acquired from first facial image data and first voice data and a second character whose movement is determined based on a movement of a second facial feature acquired from second facial image data and second voice data. Here, the first facial image data and the first voice data may correspond to input data acquired from a first user terminal, and the second facial image data and the second voice data may correspond to input data acquired from a second user terminal.

According to an example embodiment, an appearance of the first character may be determined based on a selection input related to determination of the appearance of the character acquired from the first user terminal, and an appearance of the second character may be determined based on a selection input related to determination of the appearance of the character acquired from the second user terminal.

For example, input data received by the video generating system may include real-time video call data of the first user terminal and the second user terminal. In this case, the first facial image data shoot by the first user terminal and the first voice data that is a voice of the user received through the first user terminal may be received through the first user terminal, and the second facial image data shoot by the second user terminal and the second voice data that is a voice of the user received through the second user terminal may be received through the second user terminal.

According to an example embodiment, the input data received by the video generating system may include first input data received from the first user terminal and second input data received from the second user terminal in relation to the first input data. For example, when a first video including the first character is generated based on the first input data received from the first user terminal, the second input data corresponding to the first video may be received from the second user terminal, and a second video following the first video may be generated based on the second input data. The second video may be determined based on the second input data, the movement of the first character included in the first video, and other factors included in the first video. For example, when the first video includes the first character sitting on a bench and talking, the second video may be generated to include the second character sitting next to the first character and talking.

According to an example embodiment, the determining of the movement of the character (operation 130) may further include determining, based on at least one of the purpose of the video, the first voice data, and the second voice data, an interaction between the first character and the second character, and determining, based on the determined interaction, the movement of the first character and the movement of the second character. The interaction may refer to an action including an interaction or mutual contact of the plurality of characters, such as talking, shaking hands, or hugging.

According to an example embodiment, the interaction between the first character and the second character may be determined based on the purpose of the acquired video. For example, a plurality of interaction candidates may be predetermined to correspond to each purpose of the video. For example, for the purpose of "romantic conversation," interactions such as holding hands and hugging may be determined as interaction candidates. For the purpose of "discussing," an interaction such as shaking hands may be determined as interaction candidates.

According to an example embodiment, the interaction between the first character and the second character may be determined based on the acquired voice data. An interaction corresponding to a specific word may be predetermined. When the word is recognized from the voice data, an interaction corresponding to the word may be determined. For example, when a word "I love you" is recognized from the acquired first voice data or second voice data, an interaction of hugging may be determined.

According to an example embodiment, an interaction corresponding to the recognized word may be determined differently according to the purpose of the acquired video. For example, for a first purpose, when a first word is recognized, a first interaction may be determined. However, for a second purpose, when the same first word is recognized, a second interaction different from the first interaction may be determined. According to an example embodiment, one of the plurality of interaction candidates predetermined to correspond to the purpose of the video may be selected based on the word recognized from the voice data.

According to an example embodiment, the interaction between the first character and the second character may be determined based on the user input. The user may input a request for determining the interaction between the first character and the second character through the interface. For example, by selecting one of predetermined interaction candidates between the first character and the second character, a request for determining the interaction between the first character and the second character may be inputted. The interaction candidates between the first character and the second character may be predetermined based on the purpose of the video, as described above.

According to an example embodiment, the determining of the shot (operation 140) may include determining, based on the first voice data, the second voice data, and the purpose of the video, a shot corresponding to the first character and the second character. In the determining of the shot corresponding to the first character and the second character, the shot corresponding to the first character and the second character may include a shot including at least one of the first character and the second character. In other words, the shot corresponding to the first character and the second character may be set so that only the first character appears, only the second character appears, or both the first character and the second character appear. For example, for the purpose of "discussing," a shot including the first character that is shot from the front may be determined when the first character utters, and a shot including the second character that is shot from the front when the second character utters. For another example, for the purpose of "having a romantic conversation," a shot including the first character and the second character may be determined.

According to an example embodiment, the determining of the shot (operation 140) may include determining, based on the purpose of the video, arrangement of the first character and the second character included in the shot. The arrangement of the first character and the second character may include a positional relationship between the first character and the second character displayed in the shot and a composition of the first character and the second character. For example, based on the purpose of the video, the arrangement may be determined so that the first character and the second character sit facing each other, the arrangement may be determined so that the first character and the second character stand side by side, the arrangement may be determined so that the first character stands and the second character sits while looking at the first character, and the arrangement may be determined so the first character approaches the second character from behind.

According to an example embodiment, a relationship between the first character and the second character may be determined based on the purpose of the video, and the arrangement of the first character and the second character may be determined based on the determined relationship. For example, when the relationship between the first character and the second character is determined as friends or lovers, the first character and the second character may be arranged side by side.

According to an example embodiment, a type of communication or a type of situation may be determined based on the purpose of the video, and the arrangement of the first character and the second character may be determined based on the determined type of communication. For example, when the type of communication or the type of situation is determined as communication for buying and selling a product, communication for sharing information, or a situation of an argument or fight, the first character and the second character may be arranged to face each other. When the type of situation is determined as a situation in which a person watching a video seeks consent or a determination, the arrangement of the first character and the second character may be determined to face the same direction.

According to an example embodiment, emotion between the first character and the second character may be determined based on the purpose of the video, and the arrangement of the first character and the second character may be determined based on the determined type of emotion. For example, when the type of emotion is determined as love or gratitude, the first character and the second character may be arranged to face each other. When the type of emotion is determined as surprise or fear, the arrangement may be determined so that the first character approaches the second character from behind.

According to an example embodiment, the arrangement between the first character and the second character may be determined based on the purpose of the acquired video. For example, a plurality of arrangement candidates may be predetermined to correspond to each purpose of the video. For example, for a purpose of a "romantic conversation," arrangement candidates such as arrangement of sitting side-by-side on a bench, arrangement of sitting facing each other, and arrangement of standing hand in hand may be determined.

According to an example embodiment, the arrangement of the first character and the second character may be determined based on the user input. The user may input a request for determining the arrangement between the first character and the second character through the interface. For example, by selecting one of the predetermined arrangement candidates between the first character and the second character, a request for determining the arrangement between the first character and the second character may be inputted. The arrangement candidates between the first character and the second character may be predetermined based on the purpose of the video, as described above.

According to an example embodiment, operations 120 to 140 may be performed in parallel or sequentially. For example, operation 120 of determining the character and operation 130 of determining the movement of the character may be performed in parallel, and the determined character may be synthesized with the determined movement of the character so that the moving character is included in the video. For another example, operation 140 of determining the shot corresponding to the character may be performed in parallel with operation 120 of determining the character and operation 130 of determining the movement of the character. A sequence of shots for shooting an arbitrary character at a specific angle and in a specific size may be determined by operation 140 of determining the shot. The video may be generated by shooting the moving character determined by operations 120 and 130 with the sequence of shots determined by operation 140.

FIGS. 5 to 9 illustrate an example of an interface for editing a determined shot according to an example embodiment.

Referring to FIG. 5, the determined shot sequence may include a plurality of shots, and the plurality of shots may include shots having different types of shots. For example, a first shot 501 may correspond to a first type of shot in which the character is shot up to his/her chest position from a frontal angle, and a second shot 502 may correspond to a second type of shot in which the character is shot up to a knee position from the frontal angle. According to an example embodiment, the determined shot sequence may include a plurality of shots that belongs to the same type. For example, the first shot 501 and a third shot 503 included in the determined shot sequence may correspond to the same type of shots.

According to an example embodiment, in the determined shot sequence, the length of the shot may be determined based on an utterance section in the voice data. As described above, points 511 to 514 at which transitions of shots occurs, which points recognized as a start point or an end point of an utterance, may correspond to a boundary of the utterance section.

According to an example embodiment, the interface may provide an interfacing object 530 for changing a sequence of a plurality of shots determined to correspond to the purpose of the video, and the user may change, based on the interfacing object 530, the determined sequence of shots. The interfacing object 530 according to an example embodiment may correspond to an interfacing object configured to transmit an instruction for changing the shot sequence in response to the user input. For example, in response to a shot change input of clicking the interfacing object 530, the order of the shots included in the shot sequence may be changed, the types of shots included in the shot sequence may be changed, the number of the shots included in the shot sequence may be changed, and the lengths of the shots may be changed.

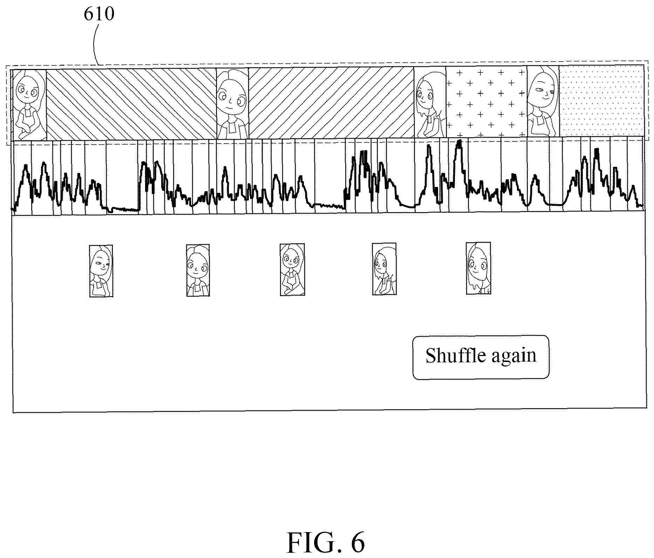

For example, in response to a shot change input for selecting the interfacing object 530 included in the interface illustrated in FIG. 5, a shot sequence 510 illustrated in FIG. 5 may be changed to a shot sequence 610 illustrated in FIG. 6. Referring to FIG. 6, in response to the shot change input, the number of shots included in the shot sequence 610 may be changed, and the types of shots included in the shot sequence 610 may be changed.

Referring back to FIG. 5, a change of the shot sequence caused by the interfacing object 530 according to an example embodiment may be randomly performed. For example, some shots may be randomly selected from a set of shots determined to correspond to the purpose of the video, and an order of the selected shots may be randomly determined. For another example, a plurality of shot sequence candidates may be outputted from a model for determining a shot sequence, and the shot sequence may be randomly determined from the outputted shot sequence candidates. For another example, the order of the shots in the determined shot sequence may be randomly changed.

According to an example embodiment, the change of the shot sequence caused by the interfacing object 530 may be performed according to a predefined rule. For example, the shot sequence may be determined by selecting some of the set of shots determined to correspond to the purpose of the video according to a predetermined order. For another example, a plurality of shot sequence candidates may be outputted from a model for determining a shot sequence, and the shot sequence may be determined according to the predetermined order from the outputted shot sequence candidates.

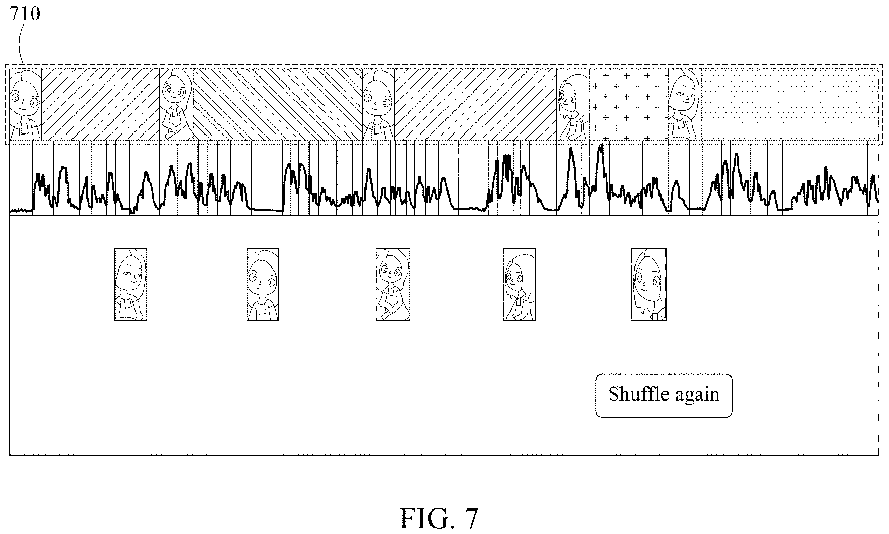

According to an example embodiment, the interface may provide a set of plurality of shots 520 determined to correspond to the purpose of the video, and the user may change a configuration of a shot sequence determined based on the provided set of shots520. For example, the user may input a request for changing a shot 505 included in the shot sequence by selecting a shot 521 from the set of shots 520 through the interface, and in response to a change input of the user, the shot sequence 510 may be changed to a shot sequence 710 illustrated in FIG. 7.

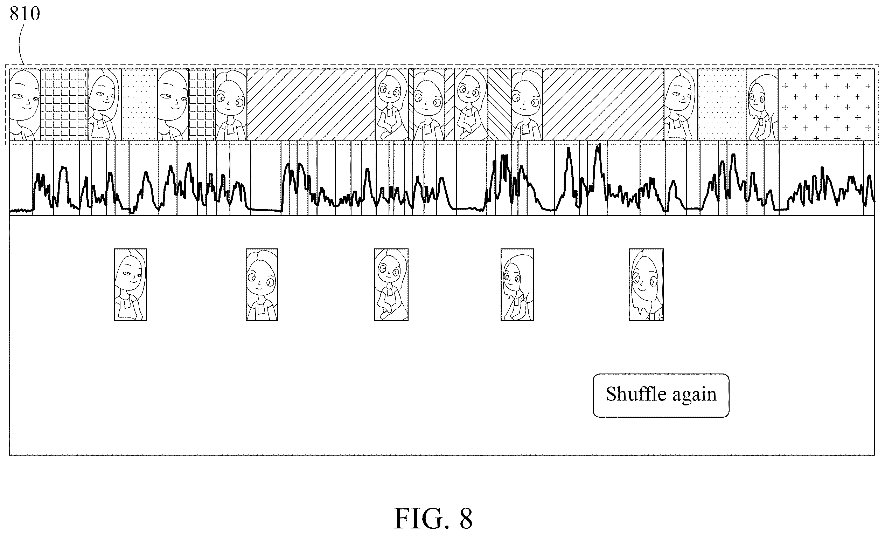

For another example, the user may input a request for selecting at least one shot from the set of shots 520 and adding the shot to a specific position of the shot sequence through the interface, and in response to an additional input of the user, the shot sequence 510 may be changed to a shot sequence 810 illustrated in FIG. 8.

According to an example embodiment, the user may input a request for changing sizes or angles of at least some shots included in the determined shot sequence through the interface. For example, the user may select at least one shot included in the shot sequence to control a size of a character included in the shot, or control an angle of the character included in the shot, thereby inputting a request for changing a shot size or shot angle. In other words, in addition to a shot type automatically determined to correspond to the purpose of the video, a specific type of shot determined based on the user input may be included in the shot sequence.

According to an example embodiment, the user may input a request for deleting at least some shots included in the determined shot sequence through the interface. For example, the user may select a shot included in the shot sequence to request deletion of the shot from the shot sequence, and the shot selected by the user may be deleted from the shot sequence. As some shots included in the shot sequence are deleted, a length of a shot positioned before or after the deleted shot may be adjusted.

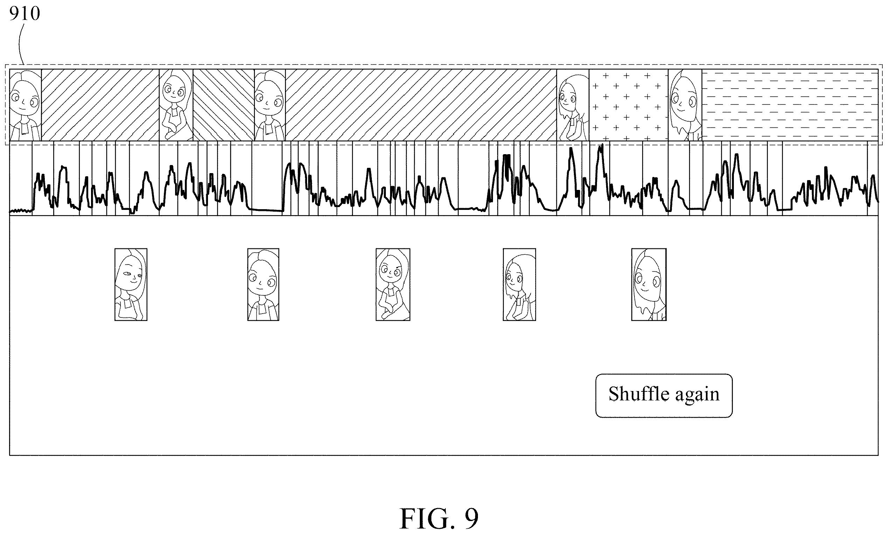

According to an example embodiment, the interface may provide a function of adjusting the lengths of the plurality of shots determined to correspond to the purpose of the video. The user may input a request for changing a length of the determined shot sequence by changing a position of a boundary of the shot through the interface. The position of the shot boundary may be changed to a boundary of an utterance section. When the position of the shot boundary inputted by the user does not correspond to the boundary of the utterance section, the position of the shot boundary may be changed to a boundary of a nearby utterance section by a magnetic effect. For example, the user may input a request for changing a position 512 of a boundary between the shot 502 and the shot 503 to a position 515 through the interface, and the shot sequence 510 may be changed to a shot sequence 910 illustrated in FIG. 9, in response to the change input of the user.

According to an example embodiment, a sequence of the plurality of facial expressions of the character corresponding to the facial expression of the character or the video determined based on the purpose of the video may be changed by the selection input of the user. For example, the user may change the facial expression determined to correspond to each frame to another facial expression by means of a selection input for the plurality of facial expressions provided to correspond to the character through the interface, and may determine the facial expression corresponding to each frame by adding another expression to the facial expression sequence.

According to an example embodiment, visual elements and auditory elements corresponding to a specific shot may be determined by an input of the user. For example, the visual elements such as a posture, prop, background, and text of the character corresponding to all shots or some shots may be set or changed by the input of the user. For another example, the auditory elements such as a sound effect corresponding to the specific shot and background music corresponding to all shots or some shots may be set or changed according to the input of the user.

According to an example embodiment, elements set or changed by the input of the user may be determined by an input of selecting some of a plurality of candidates provided through the interface. For example, the plurality of candidates related to various postures of the character may be provided through the interface, and the user may determine a posture or a sequence of postures of the character in a scene determined by a shot by selecting one of the plurality of candidates related to the posture of the character. For another example, a plurality of candidates related to the sound effect may be provided through the interface, and the user may determine the sound effect by selecting the sound effect to be included in the video at a specific point in time from among the plurality of candidates.

FIG. 10 is a block diagram illustrating a configuration of a video generating system according to an example embodiment.

Referring to FIG. 10, the video generating system according to an example embodiment may be implemented as an apparatus, and the apparatus in which the video generating system is implemented may include a terminal 1010 and a server 1020. In other words, the terminal 1010 and the server 1020 according to an example embodiment may correspond to a video generating apparatus that performs the above-described video generating method. The configuration of the system illustrated in FIG. 10 may be an example for description of the example embodiments, and the number of terminals or the number of servers included in the system is not limited, as illustrated in FIG. 10.

The terminal 1010 according to an example embodiment may be a fixed terminal implemented as a computer device or a mobile terminal. For example, the terminal 1010 may include a smart phone, a mobile phone, a computer, a notebook computer, a terminal for digital broadcasting, a personal digital assistant (PDA), a portable multimedia player (PMP), and a tablet PC. For example, a user terminal may communicate with the server 1020 and/or other electronic devices through a network 1030 using a wireless or wired communication scheme.

The server 1020 according to an example embodiment may be implemented as a computer device or a plurality of computer devices that communicate(s) with the terminal 1010 and the network 1030 to provide an instruction, a code, a file, a content, a service, and the like. The communication scheme is not limited, and may include a communication scheme using a communication network (for example, a mobile communication network, wired Internet, wireless Internet, and broadcasting network) that may be included in the network 1030, and a short-range wireless communication scheme between devices. For example, the network 1030 may include any one or more of networks such as a personal area network (PAN), a local area network (LAN), a campus area network (CAN), a metropolitan area network (MAN), a wide area network (WAN), and a broadband network (BBN), the Internet, and the like.

According to an example embodiment, the server 1020 may provide a file for installing an application to the terminal 1010 accessed through the network 1030. In this case, the terminal 1010 may install an application using a file provided from the server 1020. In addition, the terminal 1010 may be provided with a service or content provided by the server 1020 by accessing the server 1020 under control of an operating system (OS) and at least one program (for example, a browser or an installed application) included in the terminal 1010. For example, when the terminal 1010 transmits a service request message to the server 1020 through the network 1030 under control of the application, the server 1020 may transmit a code corresponding to the service request message to the terminal 1010, and the terminal 1010 may provide the content to the user by configuring and displaying a screen according to the code under control of the application.

According to an example embodiment, the terminal 1010 and the server 1020 may include memories 1011 and 1021, processors 1013 and 1023, communication modules 1015 and 1025, and input/output interfaces 1017 and 1027.

The processors 1013 and 1023 may perform at least one of the operations described above with reference to FIGS. 1 to 9. For example, the processor 1013 or the processor 1023 may perform the operations described above with reference to FIGS. 1 to 9, the processor 1013 may perform some of the operations described above with reference to FIGS. 1 to 9, and the processor 1023 may also perform some other operations. The processors 1013 and 1023 may be configured to process an instruction of a computer program by performing basic arithmetic, logic, and input/output operations. The instruction may be provided to the processor 1013 and 1023 by the memories 1011 and 1021 or the communication modules 1015 and 1025.

The memories 1011 and 1021 may store information related to the video generating method described above with reference to FIGS. 1 to 9 or a program in which the above-described video generating method is implemented. The memories 1011 and 1021, which are computer-readable recording media, may be volatile memory or nonvolatile memory. For example, the program in which the above-described video generating method is implemented may include a code for a browser or application installed and driven in the terminal 1010 by files provided by the server 1020 through the network 1030.

The communication modules 1015 and 1025 according to an example embodiment may provide a function of allowing the terminal 1010 and the server 1020 to communicate with each other through the network 1030, and to communicate with other electronic devices or other servers. For example, a request generated by the processor 1013 of the terminal 1010 according to a program code stored in a recording device such as the memory 1011 may be transmitted to the server 1020 through the network 1030 under control of the communication module 1015. For example, a control signal, an instruction, a content, a file, and the like provided under control of the processor 1023 of the server 1020 may pass through the communication module 1025 and the network 1030 to be received by the terminal 1010 through the communication module 1015 of the terminal 1010. For example, the control signal, the instruction, or the like of the server 1020 received through the communication module 1015 may be transmitted to the processor 1013 or the memory 1011, and the content, the file, or the like of the server 1020 may be stored in a storage medium that may be further included in the terminal 1010.

The input/output interfaces 1017 and 1027 may be means for an interface with an input/output device 1019. For example, an input device may include a device such as a keyboard or mouse, and an output device may include a device such as a display for displaying a communication session of an application. For another example, the input/output interface 1017 may be a means for an interface with a device in which functions for input and output are integrated into one, such as a touch screen. As a more specific example, when the processor 1013 of the terminal 1010 processes an instruction of a computer program loaded in the memory 1011, a service screen or content configured using data provided by the server 1020 may be displayed on the input/output interface 1017. An input received from the user through the input/output device 1019 may be provided in a form that may be processed by the processor 1013 of the terminal 1010 through the input/output interface 1017.

According to an example embodiment, the terminal 1010 and the server 1020 may include other components not illustrated in FIG. 10. For example, the terminal 1010 may be implemented to include at least a portion of the above-described input/output device 1019 or may further include other components such as a transceiver, a global positioning system (GPS) module, a camera, various sensors, a database, and the like.

The units described herein may be implemented using a hardware component, a software component and/or a combination thereof. A processing device may be implemented using one or more general-purpose or special purpose computers, such as, for example, a processor, a controller and an arithmetic logic unit (ALU), a DSP, a microcomputer, an FPGA, a programmable logic unit (PLU), a microprocessor or any other device capable of responding to and executing instructions in a defined manner. The processing device may run an OS and one or more software applications that run on the OS. The processing device may also access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such as parallel processors.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magnetooptical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher level code that may be executed by the computer using an interpreter.

The above-described devices may be configured to act as one or more software modules in order to perform the operations of the above-described example embodiments, or vice versa.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. A video generating method comprising:
acquiring voice data, facial image data including a face, and input data including a purpose of a video;
determining, based on a movement of a facial feature extracted from the facial image data and the voice data, a movement of a character;
determining, based on the voice data and the purpose, a shot corresponding to the character; and
generating, based on the determined shot, a video corresponding to the voice data.

2. The video generating method of claim 1, wherein the determining of the shot comprises:
determining, based on an utterance section in the voice data, a length of the shot; and
determining, based on the purpose, a type of the shot.

3. The video generating method of claim 2, wherein the type of the shot is distinguished by a shot size based on a size of the character projected onto the shot and a shot angle based on an angle of the character projected onto the shot.

4. The video generating method of claim 1, wherein the determining of the shot comprises:
determining, based on the purpose, a sequence of a plurality of shots, the plurality of shots including a plurality of different types of shots;
dividing, based on a change in a size of the voice data, the voice data into a plurality of utterance sections; and
determining, based on the plurality of utterance sections, lengths of the plurality of shots.

5. The video generating method of claim 4, wherein the determining of the lengths of the plurality of shots comprises:
determining, based on the purpose and the plurality of utterance sections, at least one transition point at which a shot is transited; and
determining, based on the transition point, the lengths of the plurality of shots.

6. The video generating method of claim 4, wherein the determining of the shot further comprises at least one of:
changing, based on an input of a user, an order of shots in the sequence;
adding, based on the input of the user, at least one shot to the sequence;
deleting, based on the input of the user, at least one shot in the sequence;
changing, based on the input of the user, a type of a shot in the sequence; and
changing, based on the input of the user, a length of the shot in the sequence.

7. The video generating method of claim 1, wherein the determining of the movement of the character comprises:
determining, based on pronunciation information corresponding to the voice data, a movement of a mouth shape of the character; and
determining, based on a movement of the facial feature extracted to correspond to a plurality of frames of the facial image data, a movement of a facial element of the character.

8. The video generating method of claim 1, wherein the determining of the movement of the character comprises:
determining, based on the purpose, a facial expression of the character;
determining, based on a movement of the facial feature and the voice data, a movement of a facial element of the character; and
combining the determined facial expression of the character and the movement of the facial element of the character.

9. The video generating method of claim 1, wherein the acquiring of the input data further comprises extracting, from the facial image data, the movement of the facial feature including at least one of a movement of a pupil, a movement of an eyelid, a movement of an eyebrow, and a movement of a head.

10. The video generating method of claim 1, wherein
the character comprises:
a first character whose movement is determined based on a movement of a first facial feature acquired from first facial image data in the facial image data and first voice data in the voice data; and
a second character whose movement is determined based on a movement of a second facial feature acquired from second facial image data in the facial image data and second voice data in the voice data, and
the determining of the shot comprises determining, based on the first voice data in the voice data, the second voice data in the voice data, and the purpose, a shot corresponding to the first character and the second character.

11. A non-transitory computer-readable medium storing computer-readable instruction that, when executed by a processor, cause the processor to perform the method of any one of claims 1 to 10.

12. A video generating apparatus comprising:
at least one processor configured to:
acquire voice data, facial image data including a face, and input data including a purpose of a video;
determine, based on a movement of a facial feature extracted from the facial image data and the voice data, a movement of a character;
determine, based on the voice data and the purpose, a shot corresponding to the character; and
generate, based on the determined shot, a video corresponding to the voice data.

13. The video generating apparatus of claim 12, wherein
in determining the shot, the processor is configured to:
determine, based on the purpose, a sequence of a plurality of shots, the plurality of shots including a plurality of different types of shots;
divide, based on a change in a size of the voice data, the voice data into a plurality of utterance sections; and
determine, based on the plurality of utterance sections, lengths of the plurality of shots.

14. The video generating apparatus of claim 12, wherein
in determining the shot, the processor is configured to further perform at least one of:
an operation of changing, based on an input of a user, an order of shots in the sequence;
an operation of adding, based on the input of the user, at least one shot to the sequence;
an operation of deleting, based on the input of the user, at least one shot in the sequence;
an operation of changing, based on the input of the user, a type of a shot in the sequence; and
an operation of changing, based on the input of the user, a length of the shot in the sequence.

15. The video generating apparatus of claim 12, wherein
in determining the movement of the character, the processor is configured to:
determine, based on the purpose, a facial expression of the character;
determine, based on a movement of the facial feature and the voice data, a movement of a facial element of the character; and
combine the determined facial expression of the character and the movement of the facial element of the character.
